# FASCICULE DE BREVET EUROPEEN

(11) **EP 3 073 148 B1**
(45) Date de publication et mention de la délivrance du brevet: **13.09.2017**
(21) Numéro de dépôt: 16162155.2
(22) Date de dépôt: 24.03.2016
(51) Int. Cl.: F16F 15/14

(54) **DISPOSITIF D'AMORTISSEMENT D'OSCILLATIONS DE TORSION**
VORRICHTUNG ZUR TORSIONSSCHWINGUNGSDÄMPFUNG
DEVICE FOR DAMPING TORSIONAL OSCILLATIONS

(30) Priorité: 27.03.2015 FR 1552635
(43) Date de publication de la demande: 28.09.2016
(73) Titulaire: Valeo Embrayages, 80009 Amiens Cedex 2 (FR)
(72) Inventeur: MARECHAL, Olivier, 80000 LAHOUSSOYE (FR); BOITELLE, Maxence, 62118 Biache Saint Vaast (FR)
(74) Mandataire: Cardon, Nicolas

(56) Documents cités:
- WO-A1-2011/060752
- DE-A1- 3 429 229
- DE-A1-102008 028 570

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque de friction de l'embrayage ou à un convertisseur de couple hydrodynamique.

Afin de filtrer des oscillations de torsion se propageant dans le système de transmission du fait des acyclismes du moteur thermique, il est connu d'utiliser un dispositif d'amortissement de ces oscillations de torsion présentant une fréquence de résonance fixe et indépendante de la vitesse du moteur thermique, un tel dispositif étant encore appelé batteur. Ces oscillations de torsion peuvent aussi être dues aux vibrations générées dans la zone de l'embrayage et se manifestant dans la chaîne cinématique du véhicule lors de la phase de glissement de l'embrayage.

La demande WO 2011/060752 divulgue ainsi un batteur intégré dans un disque de friction et muni d'un limiteur de couple permettant de protéger le batteur lorsque ce dernier est soumis à des vitesses de rotation trop importantes. Au sens de la présente demande, un limiteur de couple est une pièce configurée pour exercer une force de frottement sur le dispositif d'amortissement d'oscillations de torsion, cette force maintenant le composant primaire du dispositif d'amortissement d'oscillations de torsion solidaire en rotation du moyeu du disque tant que le couple exercé par ce dispositif sur le limiteur de couple est inférieur à une valeur prédéfinie.

Le batteur selon WO 2011/060752 est relativement complexe et onéreux à réaliser.

Il existe un besoin pour amortir les oscillations de torsion se propageant dans un système de transmission de véhicule automobile à l'aide d'un dispositif peu coûteux et simple à réaliser.

L'invention vise à répondre à tout ou partie de ce besoin et elle y parvient, selon l'un de ses aspects, à l'aide d'un dispositif d'amortissement d'oscillations de torsion à fréquence de résonance fixe, comprenant :
- un composant primaire,
- un composant secondaire, mobile en rotation autour d'un axe par rapport au composant primaire contre une force de rappel élastique,
l'un du composant primaire et du composant secondaire définissant au moins un chemin de guidage avec lequel coopère un élément porté par l'autre du composant primaire et du composant secondaire, le chemin de guidage présentant un profil tel que, lorsque l'élément coopère avec au moins une portion de ce chemin de guidage, l'élément se déplace axialement, de manière à permettre un déplacement axial du composant secondaire par rapport au composant primaire.

Un tel dispositif d'amortissement d'oscillations de torsion présente ainsi un composant secondaire qui est à la fois mobile en rotation et en translation par rapport au composant secondaire, et ce mouvement de translation axial est guidé par la coopération entre le chemin de guidage et l'élément.

Le dispositif d'amortissement d'oscillations de torsion présente une fréquence de résonance fixe, indépendante de la vitesse de rotation du moteur thermique. Un tel dispositif est encore appelé « batteur », étant différent d'un pendule. Le batteur peut permettre de remédier aux problèmes de broutement.

La fréquence de résonance du batteur est par exemple comprise entre 6 Hz et 14 Hz, notamment entre 8 Hz et 14 Hz. Une telle fréquence de résonance est particulièrement adaptée pour remédier aux problèmes de broutement.

Le composant secondaire joue le rôle d'une masse de filtrage. Le composant secondaire peut s'étendre majoritairement radialement extérieurement par rapport au composant primaire.

Au sens de la présente demande :
- « axialement » signifie « parallèlement à l'axe de rotation »,
- « radialement » signifie « perpendiculairement à l'axe de rotation et le long d'un axe coupant cet axe de rotation »,
- « orthoradialement » signifie «perpendiculairement à une direction radiale, dans un plan perpendiculaire à l'axe de rotation »,
- « circonférentiellement » signifie « autour de l'axe de rotation»,
- « deux pièces sont solidaires » signifie qu'elles sont rigidement couplées, et
- « le dispositif d'amortissement d'oscillations de torsion est au repos » signifie que ce dispositif est dans une position dans laquelle il peut être soumis à des forces centrifuges mais non à des oscillations de torsion issues d'acyclismes du moteur thermique.

Selon un exemple de mise en oeuvre de l'invention, le chemin de guidage est ménagé dans le composant primaire et l'élément est porté par le composant secondaire.

Dans ce cas, le chemin de guidage peut s'étendre entre deux extrémités circonférentielles situées à une même distance de l'axe de rotation. Ces deux extrémités circonférentielles peuvent, ou non, être situées à une même position le long de l'axe de rotation.

Les deux extrémités circonférentielles sont par exemple écartées d'une valeur angulaire comprise entre 25° et 35°. Chaque extrémité circonférentielle peut jouer le rôle de butée pour le déplacement en rotation du composant secondaire par rapport au composant primaire.

Le chemin de guidage peut comprendre entre ses deux extrémités circonférentielles une portion de profil décroissant et une portion de profil croissant. Une portion de profil plat, c'est-à-dire de profil sensiblement perpendiculaire à l'axe de rotation, peut être interposée entre la portion de profil décroissant et la portion de profil croissant. Lorsque l'élément coopère avec une portion de profil plat du chemin de guidage, il n'y a aucun déplacement axial du composant secondaire par rapport au composant primaire.

Chaque portion de profil croissant, respectivement décroissant, peut être une rampe dont la dimension circonférentielle est supérieure à la dimension axiale. La rampe définissant la portion de profil croissant peut présenter la même pente que celle définissant la portion de profil décroissant.

Plusieurs chemins de guidage identiques peuvent se succéder circonférentiellement. Quatre chemins de guidage identiques se succèdent par exemple. Lorsque plusieurs chemins de guidage sont ménagés, chaque chemin de guidage coopère alors avec un unique élément.

Dans tout ce qui précède, le chemin de guidage peut être ménagé dans la paroi radialement extérieure du composant primaire et l'élément peut faire saillie depuis la paroi radialement intérieure du composant secondaire. L'élément est par exemple réalisé d'une seule pièce avec la paroi radialement intérieure du composant secondaire. En variante, l'élément est une pièce rapportée sur cette paroi de manière à faire saillie par rapport à cette dernière.

L'élément peut définir une dent. Chaque dent peut s'étendre sur un secteur angulaire donné, et chaque dent peut s'étendre depuis une zone de la paroi radialement intérieure du composant secondaire qui est bordée par deux zones de ladite paroi présentant chacune une forme concave. Les zones de forme concave peuvent faciliter le rayonnage. En variante, la paroi radialement intérieure du composant secondaire est dépourvue de telles zones de forme concave autour des dents.

Le dispositif d'amortissement d'oscillations de torsion peut comprendre une pluralité d'organes de rappel élastiques disposés entre le composant primaire et le composant secondaire, de manière à générer la force de rappel élastique s'opposant à la rotation du composant secondaire par rapport au composant primaire.

Chaque organe de rappel élastique peut s'étendre entre deux extrémités circonférentielles, chacune de ces extrémités circonférentielles présentant : une portion radialement intérieure apte à venir en appui contre une paroi du composant primaire, et une portion radialement extérieure apte à venir en appui contre une paroi du composant secondaire. Autrement dit, chaque extrémité circonférentielle de l'organe de rappel élastique peut venir à la fois en contact avec le composant primaire et avec le composant secondaire. Chaque organe de rappel élastique est par exemple un ressort, notamment un ressort hélicoïdal. En variante, chaque organe de rappel élastique comprend un ressort, tel qu'un ressort hélicoïdal, et une plaque fixée sur chaque extrémité circonférentielle du ressort et définissant une extrémité circonférentielle de l'organe de rappel élastique. Les plaques ont par exemple une section sensiblement rectangulaire. Elles peuvent être réalisées en plastique.

Le composant primaire peut comprendre deux parties distinctes ménageant entre elles, lorsqu'elles sont assemblées, des logements pour les organes de rappel élastique permettant l'exercice de la force de rappel élastique. Le chemin de guidage peut alors être ménagé dans une seule de ces parties du composant primaire.

Le nombre de logements peut alors être égal au nombre de chemins de guidage. Il y a par exemple trois logements et trois chemins de guidage qui sont prévus dans le composant primaire. Chaque logement peut être interposé entre deux chemins de guidage voisins circonférentiellement parlant.

En variante, le nombre de logements peut être inférieur au nombre de chemins de guidage. Il peut ainsi exister :
- deux chemins de guidage voisins circonférentiellement parlant entre lesquels aucun logement n'est interposé, et
- deux chemins de guidage voisins circonférentiellement parlant entre lesquels un logement est interposé.

La paroi radialement extérieure du composant primaire peut définir une pluralité de nez radiaux, chaque nez radial s'étendant circonférentiellement entre deux parois radiales. Il peut exister :
- au moins un nez radial dont une paroi radiale coopère avec l'extrémité circonférentielle d'un organe de rappel élastique et dont l'autre paroi radiale définit une extrémité circonférentielle d'un chemin de guidage, et/ou
- au moins un nez radial dont chaque paroi radiale définit une extrémité circonférentielle d'un chemin de guidage, deux chemins de guidage voisins circonférentiellement parlant étant alors séparés par un tel nez radial.

En variante de ce qui a été décrit précédemment, le chemin de guidage peut être ménagé dans le composant secondaire tandis que l'élément est porté par le composant primaire. Dans tout ce qui précède, le dispositif peut comprendre un système de génération d'hystérésis pour le déplacement du composant secondaire par rapport au composant primaire.

Le système de génération d'hystérésis exerce par exemple sur le composant secondaire un couple compris entre 0,1 Nm et 2 Nm, la valeur maximale de couple d'hystérésis étant obtenue lorsque le composant secondaire tourne par rapport au composant primaire d'une valeur angulaire égale à l'amplitude du mouvement de rotation.

Le couple d'hystérésis exercé peut être constant ou variable. Le couple d'hystérésis est par exemple d'abord variable puis constant lorsque le composant secondaire tourne par rapport au composant primaire.

Le système de génération d'hystérésis peut être une pièce axialement décalée par rapport au composant secondaire et solidaire de ce composant secondaire, la pièce présentant une portion au contact du composant primaire, et la pièce étant apte à être déplacée axialement lors du déplacement axial du composant secondaire par rapport au composant primaire.

La pièce peut être élastiquement déformable. La pièce est par exemple une rondelle comprenant une portion radialement extérieure solidaire du composant secondaire et une portion radialement intérieure en contact avec le composant primaire. Le déplacement axial du composant secondaire par rapport au composant primaire peut être transmis vers la portion radialement extérieure du composant secondaire qui fléchit alors, tandis que la portion radialement intérieure de la rondelle est maintenue axialement du fait du contact avec le composant primaire. Ce contact s'oppose ainsi au basculement de la rondelle et fournit l'effort utile à l'hystérésis. Ce contact peut conduire à une déformation de la portion radialement intérieure de la rondelle, générant ainsi un couple d'hystérésis variable. Le cas échéant, une ou plusieurs rampes sont portées par la portion radialement intérieure de la rondelle.

Le système de génération d'hystérésis ci-dessus ne nécessite ainsi pas la coopération entre des rampes et des contre-rampes.

La portion radialement intérieure de la rondelle peut s'étendre de façon discontinue autour de l'axe de rotation. Une telle discontinuité permet que le système de génération d'hystérésis exerce un couple dont la valeur est suffisante mais non excessive.

Selon un exemple précis, la portion radialement extérieure de la rondelle peut s'étendre de façon continue autour de l'axe de rotation entre un bord radialement intérieur et un bord radialement extérieur, et la rondelle peut comprendre une pluralité de bras radiaux s'étendant radialement vers l'intérieur depuis cette portion radialement extérieure, et définissant les parties pleines de la portion radialement intérieure de la rondelle. « Bras radial » doit être compris de façon large, désignant un élément au moins globalement dirigé radialement. Chaque bras radial fait ainsi globalement saillie radialement vers l'axe de rotation.

Chaque bras radial peut présenter une extrémité libre, radialement à l'intérieur. Cette extrémité libre peut porter une rampe.

Des trous peuvent être ménagés dans la portion radialement extérieure de la rondelle, en regard de chaque bras radial, ces trous pouvant recevoir des moyens de solidarisation au composant secondaire, par exemple des rivets.

Le bord radialement intérieur et le bord radialement extérieur de la portion radialement extérieure de la rondelle peuvent être sensiblement circulaires. Les bras radiaux peuvent prendre naissance au niveau du bord radialement intérieur de cette portion de la rondelle. Chaque bras peut présenter une extrémité libre qui est l'extrémité en regard de l'axe de rotation.

Les bras radiaux peuvent être uniformément répartis autour de l'axe de rotation.

Chaque bras radial présente par exemple plusieurs brins se succédant circonférentiellement et séparés par un évidement. Chaque brin peut s'étendre radialement ou ne s'étendre radialement que sur une portion de sa longueur, présentant des portions s'étendant orthoradialement. Les brins d'un même bras radial peuvent être réunis entre eux au niveau de l'extrémité libre dudit bras.

Dans tout ce qui précède, le dispositif d'amortissement d'oscillations de torsion peut être porté par un moyeu.

Un limiteur de couple peut être prévu, ce dernier étant alors disposé de manière à exercer une force de frottement sur le dispositif d'amortissement d'oscillations de torsion, cette force maintenant le composant primaire du dispositif d'amortissement d'oscillations de torsion solidaire en rotation du moyeu tant que le couple exercé par ce dispositif sur le limiteur de couple est inférieur à une valeur prédéfinie.

Dans ce cas, tant que la force de frottement mentionnée ci-dessus maintient le composant primaire solidaire en rotation du moyeu, le composant secondaire peut osciller par rapport au composant primaire. Au-delà de la valeur de couple prédéfinie, le dispositif d'amortissement glisse par rapport au moyeu, dissipant ainsi l'énergie associée au couple qu'il subit. La valeur prédéfinie de couple au-delà de laquelle le glissement du dispositif d'amortissement se produit est par exemple comprise entre 4 Nm et 8 Nm, étant par exemple de l'ordre de 5 Nm.

Le limiteur de couple peut être disposé de manière à exercer une force de frottement uniquement radiale sur le dispositif d'amortissement d'oscillations de torsion. Le limiteur de couple peut alors être une rondelle disposée radialement entre le composant primaire du dispositif d'amortissement et le moyeu, et solidarisant ces derniers en rotation tant que le couple exercé par le dispositif d'amortissement sur le limiteur de couple est inférieur à la valeur prédéfinie. On évite ainsi de rajouter de l'encombrement axial au disque de friction. Une gorge ménagée dans le moyeu peut recevoir en partie le limiteur de couple.

Le limiteur de couple peut être formé par une rondelle élastiquement déformable. A l'état libre, cette rondelle peut présenter une forme proche d'un carré, cette forme étant modifiée lorsque la rondelle est introduite entre le moyeu et le dispositif d'amortissement. La rondelle peut alors présenter un forme ondulée, venant successivement en contact d'une part avec le moyeu, et d'autre part avec le composant primaire lorsque l'on se déplace circonférentiellement.

Lorsque le composant primaire est en deux parties, le chemin de guidage peut être ménagé dans l'une des parties de ce composant primaire et le limiteur de couple peut venir en contact de l'autre partie de ce composant primaire. En variante, le limiteur de couple peut venir en contact de la partie du composant primaire dans laquelle est ménagé le chemin de guidage.

La rondelle peut être réalisée en acier ressort, par exemple en C67S. La rondelle élastique peut le cas échéant être fendue.

Un système de maintien axial du composant primaire du dispositif d'amortissement d'oscillations de torsion sur le moyeu peut alors être prévu. Ce système de maintien axial peut comprendre :
- un circlip monté sur le moyeu et formant une butée axiale pour le déplacement du composant primaire dans un premier sens selon la direction axiale, et
- un épaulement ménagé dans le moyeu et formant une butée axiale pour le déplacement du composant primaire dans un deuxième sens selon la direction axiale.

Ce système de maintien axial peut ainsi permettre que le composant primaire soit immobilisé axialement, et s'oppose au basculement de la rondelle du système de génération d'hystérésis que le déplacement axial du composant secondaire par rapport au composant primaire provoquerait autrement.

Aucune des butées axiale pour le déplacement du batteur ne fait par exemple intervenir un appui axial élastique, le batteur n'étant par exemple pas en butée contre une pièce maintenue axialement par un accumulateur d'énergie tel qu'un ou plusieurs ressorts, contrairement à ce qui est enseigné par exemple dans la demande WO2011/060752 en référence à l'élément référencé (17) sur la figure 1 de cette demande.

L'invention a encore pour objet, selon un autre de ses aspects, un disque de friction pour embrayage, comprenant :
- au moins une garniture de friction définissant une entrée en couple,
- un moyeu mobile en rotation autour de l'axe de rotation du composant secondaire, et définissant une sortie en couple,
- le dispositif d'amortissement d'oscillations de torsion tel que défini ci-dessus, étant porté par le moyeu et disposé hors du chemin emprunté par le couple transmis par le disque entre l'entrée en couple et la sortie en couple.

Le disque peut comprendre un limiteur de couple tel que mentionné ci-dessus et/ou un système de maintien axial tel que mentionné ci-dessus.

Lorsque le dispositif d'amortissement d'oscillations de torsion est intégré à un disque de friction, « portion de profil décroissant » désigne une portion de chemin de guidage qui se rapproche axialement de la garniture de friction tandis que « portion de profil croissant » désigne une portion de chemin de guidage qui s'éloigne axialement de la garniture de friction.

Le disque de friction peut être dépourvu de tout amortisseur d'oscillations de torsion autre que le dispositif d'amortissement d'oscillations de torsion ou « batteur » précité, auquel cas la ou les garnitures de friction sont solidaires du moyeu.

En variante, la ou les garniture(s) de friction sont mobiles en rotation par rapport au moyeu et un amortisseur d'oscillations de torsion, autre que le dispositif d'amortissement d'oscillations de torsion précité, est prévu et disposé entre la ou les garniture(s) de friction et le moyeu. Cet amortisseur d'oscillations de torsion s'oppose alors à la rotation de la ou des garnitures par rapport au moyeu. L'amortisseur d'oscillations de torsion comprend par exemple une pluralité de ressorts. Dans un tel cas, le limiteur de couple du disque de friction est de préférence un limiteur de couple agissant exclusivement radialement décrit ci-dessus.

L'invention pourra être mieux comprise à la lecture de la description qui va suivre d'un exemple non limitatif de mise en oeuvre de celle-ci et à l'examen du dessin annexé sur lequel :
- la figure 1 est une vue en éclaté d'un disque de friction comprenant un dispositif d'amortissement d'oscillations de torsion selon un exemple de mise en oeuvre de l'invention,
- la figure 2 représente le disque de la figure 1 lorsqu'il est assemblé, en vue de dessus,
- la figure 3 est identique à la figure 2, excepté le fait qu'une partie du composant primaire du dispositif d'amortissement de torsion n'est pas représentée,
- la figure 4 représente le disque de la figure 2 sous un autre angle de vue,
- les figures 5 à 7 représentent de façon isolée certains composants du dispositif d'amortissement d'oscillations de torsion,
- la figure 8 est une vue de dessus du dispositif d'amortissement d'oscillations de torsion de la figure 3 sans que la totalité du disque de friction ne soit représentée,
- la figure 9 est un détail de la figure 8, et,
- les figures 10 et 11 sont des vues en coupe, respectivement selon X-X et XI-XI, du disque de la figure 2.

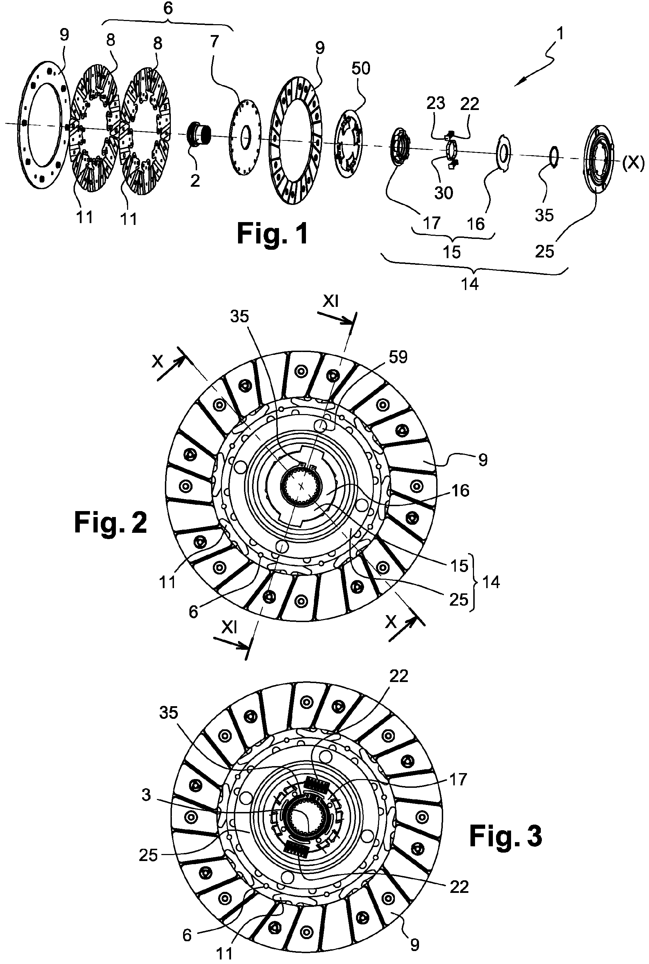

On a représenté sur la figure 1 en vue éclatée un disque de friction 1 pour embrayage d'un système de transmission de véhicule automobile. Ce disque de friction 1 comprend dans l'exemple considéré un moyeu 2 apte à entraîner en rotation autour d'un axe X un arbre non représenté d'une boîte de vitesses au moyen de cannelures 3.

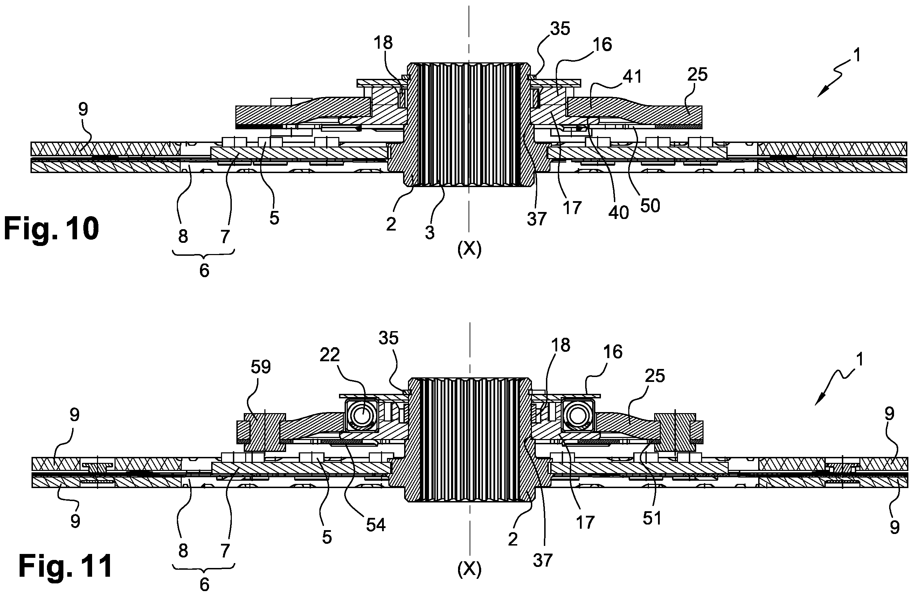

Le disque de friction 1 comprend un support 6 de garnitures de friction, également bien visible sur les figures 10 et 11. Le support 6 est dans l'exemple considéré en plusieurs parties. Il comprend un flasque 7 s'étendant radialement depuis le moyeu 2 et deux plaques 8, chaque plaque 8 supportant une garniture de friction 9. Chaque plaque 8 est ici fixée sur le flasque 7 par des rivets 5 visibles sur les figures 10 et 11. Chaque plaque 8 s'étend majoritairement radialement extérieurement par rapport au flasque 7. Une pluralité de découpes 11 de même forme et ménagées dans la plaque 8 se succèdent par exemple autour de l'axe X.

Les garnitures de friction 9 définissent ainsi une entrée en couple pour le disque de friction tandis que le moyeu 2 définit une sortie en couple pour le disque 1.

Comme on peut notamment mieux le voir sur les figures 10 et 11, le support 6 de garnitures de friction est ici solidaire du moyeu 2, c'est-à-dire que le disque 1 est dépourvu d'amortisseur d'oscillations de torsion disposé dans le chemin qu'emprunte le couple entre l'entrée et la sortie en couple dans le disque 1.

En variante, et bien que non représenté, un tel amortisseur d'oscillations de torsion disposé entre le moyeu 2 et le support 6 peut être présent, cet amortisseur comprenant par exemple une pluralité de ressorts permettant d'amortir une partie des oscillations de torsion entre les garnitures de friction 9 et le moyeu 2.

Le disque de friction 1 comprend encore un dispositif 14 d'amortissement des oscillations de torsion. Le dispositif 14 est ici un batteur, c'est-à-dire qu'il est situé hors du chemin emprunté par le couple que transmet le disque 1 depuis les garnitures de friction 9 jusqu'au moyeu 2, et qu'il comprend une fréquence de résonance fixe et indépendante de la vitesse de rotation du moteur thermique du véhicule. La fréquence de résonance du batteur 14 est dans l'exemple considéré comprise entre 8 Hz et 14 Hz.

Le batteur 14 comprend dans l'exemple considéré un composant primaire 15 disposé autour du moyeu 2. Dans l'exemple considéré, un espace radial 18, visible sur les figures 10 et 11, est ménagé entre ce composant 15 et le moyeu 2.

Dans l'exemple décrit, le composant primaire 15 est réalisé en deux parties 16 et 17 qui sont solidarisées entre elles et qui se succèdent globalement le long de l'axe X. La partie 17 du composant primaire 15 est celle qui est axialement la plus proche des garnitures de friction 9.

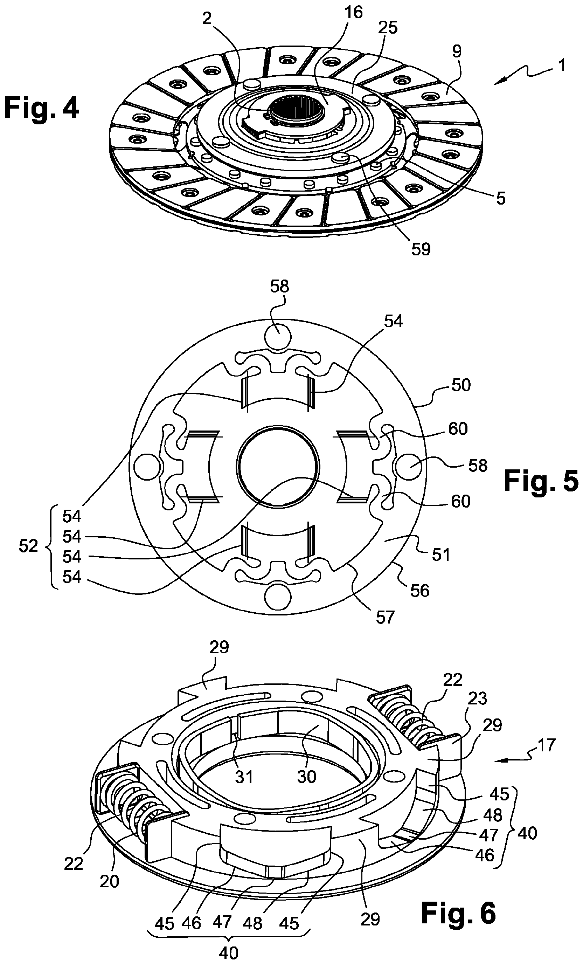

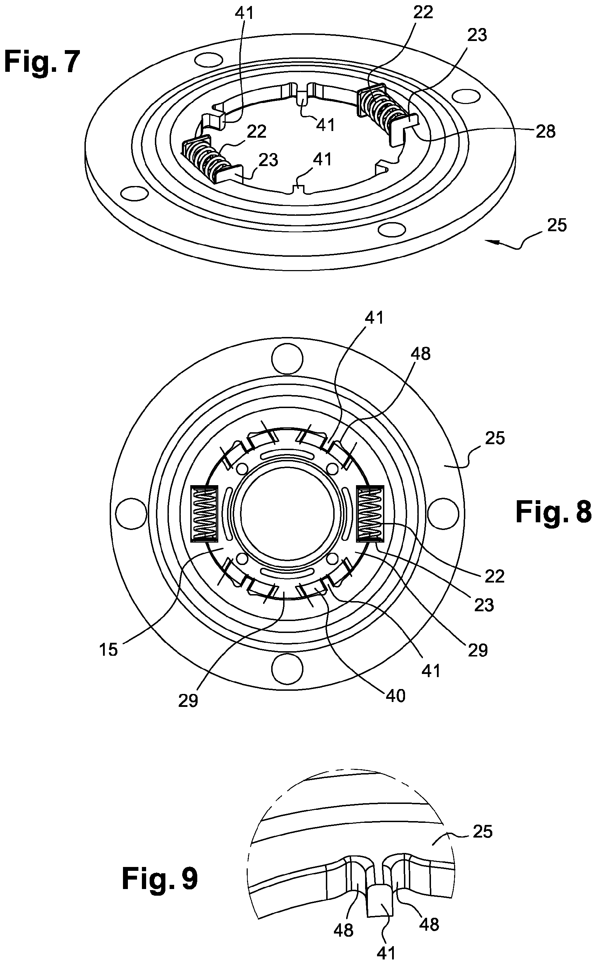

Comme on peut le voir sur la figure 3, sur laquelle la partie 16 n'est pas représentée, et sur la figure 6 qui représente cette partie 17 de façon isolée, la partie 17 présente sur sa face axialement en regard de la partie 16 des découpes coopérant avec des découpes de forme complémentaire ménagées sur la face de la partie 16 axialement en regard de la partie 17 pour définir des logements 20. Ces logements 20 reçoivent des organes de rappel élastique qui comprennent ici des ressorts 22. Ces ressorts 22 sont interposés entre le composant primaire 15 et un composant secondaire 25. Chaque extrémité circonférentielle d'un ressort 22 est fixée à une plaque 23, par exemple visible sur la figure 6. Le composant secondaire 25 forme une masse de filtrage qui est représentée de façon isolée sur la figure 7.

Le composant secondaire 25 est mobile en rotation par rapport au composant primaire 15 autour de l'axe X, les ressorts 22 s'opposant à cette rotation du composant secondaire 25 par rapport au composant primaire 15 en en limitant le débattement. L'amplitude de rotation du composant secondaire 25 par rapport au composant primaire 15 est dans l'exemple considéré comprise entre 14° et 18°.

Dans l'exemple considéré, deux ressorts 22 sont prévus, chaque ressort 22 étant reçu dans un logement 20. Le ressort unique modélisant l'ensemble des ressorts 22 du batteur 14 présente par exemple un coefficient de raideur angulaire compris entre 0.02 Nm/° à 0.15Nm/°.Chaque plaque 23, qui forme une extrémité circonférentielle d'un organe de rappel, présente une zone radialement intérieure apte à venir en appui contre une paroi radiale du logement 20, comme représenté sur la figure 6, et une zone radialement extérieure apte à venir en appui contre une paroi radiale 28 du composant secondaire 25.

Une rainure peut être ménagée dans le composant primaire, étant radialement disposée entre un logement 20 et l'axe de rotation X. Ces rainures peuvent permettre de réduire le poids du batteur 14.

Comme on peut le voir notamment sur la figure 6, une pluralité de nez radiaux 29 peut se succèder circonférentiellement sur la paroi radialement extérieure de la partie 17 du composant primaire 17. Chaque plaque 23 vient alors en appui par sa zone radialement intérieure contre une des parois d'un nez radial 29.

Comme représenté sur les figures, le composant secondaire 25 s'étend majoritairement radialement extérieurement par rapport au composant primaire 15. Le composant secondaire 25 définit une masse qui présente par exemple un moment d'inertie compris entre 0.0005 et 0.002 kg.m².

Le disque de friction 1 de l'exemple décrit comprend encore un limiteur de couple 30 qui va maintenant être décrit. Le limiteur de couple 30 est ici une rondelle élastiquement déformable qui est introduite dans l'espace radial 18. Comme on peut notamment le voir sur la figure 6, la rondelle élastiquement déformable 30 présente dans l'exemple décrit une fente 31. Une fois introduite dans l'espace radial 18, la rondelle élastiquement déformable 30 présente successivement circonférentiellement une alternance de zones en contact avec le moyeu 2 et de zones en contact avec la partie 17 du composant primaire 15 du batteur 14.

Tant que le couple appliqué sur le batteur 14 est inférieur à une valeur prédéfinie, qui est par exemple comprise entre 4 Nm et 8 Nm, le limiteur de couple 30 exerce une force de frottement radiale maintenant le composant primaire 15 du batteur 14 solidaire du moyeu 2. Le limiteur de couple 30 est ici conçu pour agir exclusivement radialement sur le batteur 14, c'est-à-dire que la force de frottement qu'il exerce sur le composant primaire 15 du batteur 14 est dépourvue de composante autre que la composante radiale.

En revanche, lorsque le couple appliqué sur le batteur 14 devient trop important, par exemple lorsque le batteur 14 est excité à sa fréquence de résonance, le couple qu'il exerce sur le limiteur de couple 30 dépasse la valeur prédéfinie. Le composant primaire 15 du batteur 14 glisse alors par rapport au moyeu 2, ce qui permet de dissiper l'énergie générée dans le batteur 14, et donc de protéger ce dernier.

Un système de maintien axial du composant primaire 15 du batteur 14 sur le moyeu 2 est par ailleurs prévu dans l'exemple décrit. Ce système de maintien en position axiale comprend :
- d'une part un circlip 35 notamment visible sur les figures 1 à 3, et qui forme une butée axiale pour le déplacement du composant primaire 15 en éloignement de la garniture de friction 9, et
- d'autre part un épaulement 37 du moyeu 2 visible sur les figures 10 et 11, et qui forme une butée axiale pour le déplacement axial du composant primaire 15 en rapprochement de la garniture de friction 9.

Le composant primaire 15 peut venir directement en butée contre cet épaulement 37 ou venir en butée contre une pièce elle-même en butée contre cet épaulement du moyeu 2.

Le composant primaire 15 du batteur 14 est alors immobilisé axialement par rapport au moyeu 2.

Selon l'invention, le composant secondaire 25 du batteur 14 est mobile axialement par rapport au composant primaire 15. Ce mouvement axial est guidé grâce à la coopération entre chemins de guidage 40 et dents 41. Dans l'exemple considéré, plusieurs chemins de guidage 40 sont ménagés dans la paroi radialement extérieure de la partie 17 du composant primaire, et plusieurs dents 41 font saillie radialement vers l'intérieur depuis la paroi radialement intérieure du composant secondaire 25.

Chaque chemin de guidage 40 coopère avec une unique dent 41 et, du fait de cette coopération, le composant secondaire 25 peut se déplacer axialement par rapport au composant primaire 15 lors d'un mouvement de rotation autour de l'axe X du composant secondaire 25 par rapport au composant primaire 15.

Comme on peut notamment le voir sur la figure 6, chaque chemin de guidage 40 s'étend circonférentiellement entre deux extrémités 45, et chacune de ces extrémités 45 est dans l'exemple décrit définie par une paroi radiale appartenant à un nez radial 29.

Les extrémités circonférentielles 45 d'un même chemin de guidage sont dans l'exemple considéré situées à une même distance de l'axe de rotation X et elles occupent une même position le long de cet axe de rotation X.

Deux extrémités circonférentielles 45 d'un même chemin de guidage 40 sont par exemple écartées d'une valeur angulaire comprise entre 25° et 35°..

Chaque extrémité circonférentielle 45 peut définir une butée pour le déplacement de la dent 41 le long du chemin de guidage 40.

Comme représenté, le nombre de logements 20 est ici inférieur au nombre de chemins de guidage 40, de sorte qu'il existe deux chemins de guidage 40 voisins circonférentiellement parlant entre lesquels aucun logement 20 n'est interposé et deux chemins de guidage 40 voisins circonférentiellement parlant entre lesquels un logement 20 est interposé.

Il existe ainsi, ménagés dans la paroi radialement extérieure de la partie 17 du composant primaire 15 :
- des nez radiaux 29 dont chaque paroi radiale définit une extrémité circonférentielle 45 d'un chemin de guidage 40, et
- des nez radiaux 29 dont une paroi radiale définit une extrémité circonférentielle 45 d'un chemin de guidage 40 et dont l'autre paroi radiale est en contact avec une plaque 23 d'un organe de rappel élastique.

Comme représenté sur la figure 6, tous les chemins de guidage 40 peuvent être identiques. Chaque chemin de guidage 40 peut comprendre entre ses extrémités circonférentielles 45 :
- une portion de profil décroissant 46, se rapprochant du support 6,
- une portion de profil plat 47, et
- une portion de profil croissant 48, s'éloignant du support 6.

Comme représenté sur la figure 6, chacune des portions 46 et 48 forme une rampe dont la dimension circonférentielle est supérieure à la dimension axiale.

Comme représenté sur les figures 7 à 9, chaque dent 41 peut être formée d'une seule pièce avec le composant secondaire 25 et faire saillie radialement vers l'intérieur depuis la paroi radialement intérieure de ce composant secondaire 25.

Comme on peut le voir sur la figure 9 notamment, chaque dent 41 s'étend depuis une zone de la paroi radialement intérieure du composant secondaire 25 qui est bordée par deux zones 48 de ladite paroi présentant chacune une forme concave.

Le batteur 14 peut encore comprendre un système de génération d'hystérésis pour le déplacement du composant secondaire 25 par rapport au composant primaire 15 qui va maintenant être décrit.

Ce système de génération d'hystérésis est ici une rondelle élastiquement déformable 50 qui va maintenant être décrite et qui est représentée plus en détail sur la figure 5. Cette rondelle 50 est solidaire du composant secondaire 25. La rondelle 50 comprend :
- une portion radialement extérieure 51 s'étendant continument autour de l'axe X, et
- une portion radialement intérieure 52 s'étendant de façon discontinue autour de l'axe X.
Les parties pleines de la portion radialement intérieure 52 sont des bras radiaux 54 faisant saillie radialement vers l'intérieur, c'est-à-dire vers l'axe X, depuis la portion radialement extérieure 51 de la rondelle 50. Dans l'exemple décrit, quatre bras radiaux 54 sont répartis uniformément autour de l'axe X.

Comme on peut le voir sur la figure 5, la portion radialement extérieure 51 de la rondelle 50 présente dans l'exemple considéré un bord radialement extérieur 56 circulaire et un bord radialement intérieur 57 circulaire. Une pluralité de trous 58 sont ménagés dans cette portion 51 en regard de chaque bras radial 54. Chacun de ces trous 58 reçoit un moyen de solidarisation 59 de la rondelle 50 au composant secondaire 25 du batteur 14, comme représenté sur la figure 11. Les moyens de solidarisation 59 sont par exemple des rivets.

Comme représenté, chaque bras radial 54 prend naissance au niveau du bord radialement intérieur 57 de la portion radialement extérieure 51 de la rondelle 50.

Chaque bras radial 54 comprend ici deux brins 60, chacun de ces derniers présentant successivement ici depuis son extrémité naissant sur le bord 57 :
- une portion s'étendant radialement vers l'intérieur,
- une portion s'étendant circonférentiellement vers l'autre brin 60 du bras 54,
- une portion s'étendant radialement vers l'extérieur, et
- une portion s'étendant radialement vers l'intérieur jusqu'à l'extrémité libre commune à l'autre brin 60 du bras 54.

Une rampe peut être ménagée sur l'extrémité libre de chaque bras.

Comme représenté sur la figure 11 notamment, la rondelle 50 vient en appui, par sa portion radialement intérieure 52 via les bras radiaux 54, contre le composant primaire 15 du batteur 14.

La portion radialement intérieure 52 de la rondelle 52 est ainsi immobilisée axialement par le composant primaire 15 du batteur 14. Cette immobilisation axiale permet de maintenir les dents 41 contre les chemins de guidage 40.

On va maintenant décrire la façon dont un couple d'hystérésis variable peut être généré par le système 50 lors de la rotation du composant secondaire 25 par rapport au composant primaire 15 du batteur 14.

Lors de ce mouvement de rotation, la coopération entre chemins de guidage 40 et dents 41 va permettre, le long des portions 46 et 48 de ces chemins de guidage 40, le déplacement axial du composant secondaire 25 par rapport au composant primaire 15. Ce déplacement axial du composant secondaire 25 est transmis via les moyens de solidarisation 59 à la portion radialement extérieure 51 de la rondelle 50. Ce déplacement va faire fléchir les brins 60 des bras radiaux 54 de la rondelle. Le déplacement de l'extrémité libre des bras radiaux 54 est empêché par le contact entre ces derniers et le composant primaire 15, ce composant primaire 15 étant comme déjà mentionné immobilisé axialement. Ainsi, la force de maintien exercée par le composant primaire 15 sur l'extrémité libre des bras radiaux 54 fournit l'effort utile à l'hystérésis.

L'invention n'est pas limitée à l'exemple qui vient d'être décrit.

Dans une variante, les dents peuvent faire saillie depuis la paroi radialement extérieure du composant primaire 15, tandis que les chemins de guidage 40 sont ménagés dans la paroi radialement intérieure du composant secondaire 25.

Le batteur 14 selon l'invention peut également être associé à d'autres composants d'un système de transmission qu'un disque de friction pour embrayage, par exemple à un convertisseur de couple hydrodynamique ou un double volant amortisseur ou une inertie primaire tel qu'un volant.

## Revendications

1. Dispositif d'amortissement d'oscillations de torsion (14) à fréquence de résonance fixe, comprenant :
- un composant primaire (15),
- un composant secondaire (25), mobile en rotation autour d'un axe (X) par rapport au composant primaire (15) contre une force de rappel élastique,
l'un du composant primaire (15) et du composant secondaire (25) définissant au moins un chemin de guidage (40) avec lequel coopère un élément (41) porté par l'autre du composant primaire (15) et du composant secondaire (25),
**caractérisé en ce que** le chemin de guidage (40) présentant un profil tel que, lorsque l'élément (41) coopère avec au moins une portion (46, 48) au moins de ce chemin de guidage (40), l'élément (41) se déplace axialement, de manière à permettre un déplacement axial du composant secondaire (25) par rapport au composant primaire (15).

2. Dispositif selon la revendication 1, le chemin de guidage (40) étant ménagé dans le composant primaire (15) et l'élément (41) étant porté par le composant secondaire (25).

3. Dispositif selon la revendication 2, le chemin de guidage (40) s'étendant entre deux extrémités circonférentielles (45) situées à une même distance de l'axe de rotation (X).

4. Dispositif selon la revendication 3, le chemin de guidage (40) comprenant entre ses deux extrémités circonférentielles (45) une portion de profil décroissant (46) et une portion de profil croissant (48).

5. Dispositif selon la revendication 4, chaque portion de profil croissant (48), respectivement décroissant (46), étant une rampe dont la dimension circonférentielle est supérieure à la dimension axiale.

6. Dispositif selon l'une quelconque des revendications 2 à 5, le chemin de guidage (40) étant ménagé dans la paroi radialement extérieure du composant primaire (15) et l'élément (41) faisant saillie depuis la paroi radialement intérieure du composant secondaire (25).

7. Dispositif selon l'une quelconque des revendications 2 à 6, le composant primaire (15) comprenant deux parties distinctes (16, 17) ménageant entre elles, lorsqu'elles sont assemblées, des logements (20) pour des organes de rappel élastique (22, 23) permettant l'exercice de la force de rappel élastique, et le chemin de guidage (40) étant ménagé dans une seule (17) de ces parties du composant primaire (15).

8. Dispositif selon l'une quelconque des revendications précédentes, comprenant un système de génération d'hystérésis (50) pour le déplacement du composant secondaire (25) par rapport au composant primaire (15).

9. Dispositif selon la revendication 8, le système de génération d'hystérésis étant une pièce (50) axialement décalée par rapport au composant secondaire (25) et solidaire de ce dernier, la pièce présentant une portion (52) au contact du composant primaire (15), et la pièce (50) étant apte à être déplacée axialement lors du déplacement axial du composant secondaire (25) par rapport au composant primaire (15).

10. Dispositif selon la revendication 9, la pièce (50) étant une rondelle comprenant une portion radialement extérieure (51) solidaire du composant secondaire (25) et une portion radialement intérieure (52) en contact avec le composant primaire (15).

11. Dispositif selon la revendication 10, la portion radialement intérieure (52) de la rondelle (50) s'étendant de façon discontinue autour de l'axe de rotation (X).

12. Disque de friction (1) pour embrayage, comprenant :
- au moins une garniture de friction (9) définissant une entrée en couple,
- un moyeu (2) mobile en rotation autour de l'axe (X) de rotation du composant secondaire (25), et définissant une sortie en couple,
- le dispositif d'amortissement d'oscillations de torsion (14) selon l'une quelconque des revendications précédentes, étant porté par le moyeu (2) et disposé hors du chemin emprunté par le couple transmis par le disque (1) entre l'entrée en couple et la sortie en couple.

13. Disque selon la revendication 12, comprenant un limiteur de couple (30) disposé de manière à exercer une force de frottement sur le dispositif d'amortissement d'oscillations de torsion (14), cette force maintenant le composant primaire (15) du dispositif solidaire en rotation du moyeu (2) tant que le couple exercé par le dispositif (14) sur le limiteur de couple (30) est inférieur à une valeur prédéfinie.

## Patentansprüche

1. Vorrichtung (14) zum Dämpfen von Torsionsschwingungen mit fester Resonanzfrequenz, die Folgendes umfasst:
- eine primäre Komponente (15),
- eine sekundäre Komponente (25), die in Bezug auf die primäre Komponente (15) entgegen einer elastischen Rückstellkraft um eine Achse (X) rotatorisch beweglich ist,
wobei entweder die primäre Komponente (15) oder die sekundäre Komponente (25) wenigstens einen Führungsweg (40) definiert, mit dem ein Element (41) zusammenwirkt, das von der jeweils anderen der primären Komponente (15) und der sekundären Komponente (25) getragen wird,
**dadurch gekennzeichnet, dass** der Führungsweg (40) ein Profil aufweisend, derart, dass sich dann, wenn das Element (41) mit wenigstens einem Abschnitt (46, 48) wenigstens dieses Führungswegs (40) zusammenwirkt, das Element (41) axial verlagert, derart, dass eine axiale Verlagerung der sekundären Komponente (25) in Bezug auf die primäre Komponente (15) ermöglicht wird.

2. Vorrichtung nach Anspruch 1, wobei der Führungsweg (40) in der primären Komponente (15) ausgebildet ist und das Element (41) von der sekundären Komponente (25) getragen wird.

3. Vorrichtung nach Anspruch 2, wobei sich der Führungsweg (40) zwischen zwei Enden (45) in Umfangsrichtung, die sich in gleichem Abstand von der Drehachse (X) befinden, erstreckt.

4. Vorrichtung nach Anspruch 3, wobei der Führungsweg (40) zwischen seinen beiden Enden (45) in Umfangsrichtung einen Abschnitt, der ein abnehmendes Profil (46) besitzt, und einen Abschnitt, der ein zunehmendes Profil (48) besitzt, aufweist.

5. Vorrichtung nach Anspruch 4, wobei jeder Abschnitt mit zunehmendem Profil (48) bzw. abnehmendem Profil (46) eine Rampe ist, deren Umfangsabmessung größer als die axiale Abmessung ist.

6. Vorrichtung nach einem der Ansprüche 2 bis 5, wobei der Führungsweg (40) in der radial äußeren Wand der primären Komponente (15) ausgebildet ist und das Element (41) von der radial inneren Wand der sekundären Komponente (25) vorsteht.

7. Vorrichtung nach einem der Ansprüche 2 bis 6, wobei die primäre Komponente (15) zwei verschiedene Teile (16, 17) aufweist, die ineinander ausgebildet sind, wenn sie zusammengefügt sind, wobei Aufnahmeräume (20) für elastische Rückstellorgane (22, 23) die Ausübung der elastischen Rückstellkraft ermöglichen und wobei der Führungsweg (40) in einem einzigen (17) dieser Teile der primären Komponente (15) ausgebildet ist.

8. Vorrichtung nach einem der vorhergehenden Ansprüche, die ein Hystereseerzeugungssystem (50) für die Verlagerung der sekundären Komponente (25) in Bezug auf die primäre Komponente (15) umfasst.

9. Vorrichtung nach Anspruch 8, wobei das Hystereseerzeugungssystem ein Teil (50) ist, dass in Bezug auf die sekundäre Komponente (25) axial versetzt ist und mit dieser letzteren fest verbunden ist, wobei das Teil einen Abschnitt (52) in Kontakt mit der primären Komponente (15) aufweist und wobei das Teil (50) bei der axialen Verlagerung der sekundären Komponente (25) in Bezug auf die primäre Komponente (15) axial verlagert werden kann.

10. Vorrichtung nach Anspruch 9, wobei das Teil (50) eine Scheibe ist, die einen mit der sekundären Komponente (25) fest verbundenen radial äußeren Abschnitt (51) und einen mit der primären Komponente (15) in Kontakt befindlichen radial inneren Abschnitt (52) aufweist.

11. Vorrichtung nach Anspruch 10, wobei der radial innere Abschnitt (52) der Scheibe (50) unterbrochen um die Drehachse (X) verläuft.

12. Reibungsscheibe (1) für Kupplung, die Folgendes umfasst:
- wenigstens einen Reibungsbelag (9), der einen Drehmomenteingang definiert,
- eine Nabe (2), die um die Drehachse (X) der sekundären Komponente (25) rotatorisch beweglich ist und einen Drehmomentausgang definiert,
- die Vorrichtung zum Dämpfen von Torsionsschwingungen nach einem der vorhergehenden Ansprüche, die von der Nabe (2) getragen wird und außerhalb des Wegs angeordnet ist, den das Drehmoment nimmt, das von der Scheibe (1) zwischen dem Drehmomenteingang und dem Drehmomentausgang übertragen wird.

13. Scheibe nach Anspruch 12, die einen Drehmomentbegrenzer (30) umfasst, der in der Weise angeordnet ist, dass er auf die Vorrichtung (14) zum Dämpfen von Torsionsschwingungen eine Reibungskraft ausübt, wobei diese Kraft die primäre Komponente (15) der Vorrichtung drehfest an der Nabe (2 hält, so dass das von der Vorrichtung (14) auf dem Drehmomentbegrenzer (30) ausgeübte Drehmoment kleiner als ein im Voraus definierter Wert ist.

## Claims

1. Device (14) for damping torsional oscillations with a fixed resonant frequency, comprising:
- a primary component (15),
- a secondary component (25) which can rotate about an axis (X) with respect to the primary component (15) counter to an elastic return force,
the one of the primary component (15) and of the secondary component (25) defining at least one guide path (40) with which there cooperates an element (41) borne by the other of the primary component (15) and of the secondary component (25),
**characterized in that** the guide path (40) having a profile such that, when the element (41) cooperates with at least one portion (46, 48) at least of this guide path (40), the element (41) moves axially so as to allow an axial movement of the secondary component (25) with respect to the primary component (15).

2. Device according to Claim 1, the guide path (40) being formed in the primary component (15) and the element (41) being borne by the secondary component (25).

3. Device according to Claim 2, the guide path (40) extending between two circumferential ends (45) situated at the same distance from the axis of rotation (X).

4. Device according to Claim 3, the guide path (40) comprising a decreasing profile portion (46) and an increasing profile portion (48) between its two circumferential ends (45).

5. Device according to Claim 4, each increasing profile portion (48) and decreasing profile portion (46), respectively, being a ramp of which the circumferential dimension is greater than the axial dimension.

6. Device according to any one of Claims 2 to 5, the guide path (40) being formed in the radially outer wall of the primary component (15) and the element (41) projecting from the radially inner wall of the secondary component (25).

7. Device according to any one of Claims 2 to 6, the primary component (15) comprising two separate parts (16, 17) forming between them, when they are assembled, housings (20) for elastic return members (22, 23) allowing the elastic return force to be exerted, and the guide path (40) being formed in only one (17) of these parts of the primary component (15).

8. Device according to any one of the preceding claims, comprising a hysteresis generation system (50) for moving the secondary component (25) with respect to the primary component (15).

9. Device according to Claim 8, the hysteresis generation system being a part (50) axially offset with respect to the secondary component (25) and secured to the latter, the part having a portion (52) in contact with the primary component (15), and the part (50) being able to be moved axially during the axial movement of the secondary component (25) with respect to the primary component (15).

10. Device according to Claim 9, the part (50) being a washer comprising a radially outer portion (51) secured to the secondary component (25) and a radially inner portion (52) in contact with the primary component (15).

11. Device according to Claim 10, the radially inner portion (52) of the washer (50) extending in a discontinuous manner about the axis of rotation (X).

12. Friction disc (1) for a clutch, comprising:
- at least one friction lining (9) defining a torque input,
- a hub (2) which can rotate about the axis (X) of rotation of the secondary component (25), and defining a torque output,
- the device (14) for damping torsional oscillations according to any one of the preceding claims being borne by the hub (2) and arranged outside the path taken by the torque transmitted by the disc (1) between the torque input and the torque output.

13. Disc according to Claim 12, comprising a torque limiter (30) arranged so as to exert a frictional force on the device (14) for damping torsional oscillations, this force keeping the primary component (15) of the device coupled in rotation to the hub (2) as long as the torque exerted by the device (14) on the torque limiter (30) is below a predefined value.
